(19) Europäisches Patentamt
European Patent Office
Office européen des brevets

(11) **EP 0 870 131 B1**

(12) **EUROPEAN PATENT SPECIFICATION**

(45) Date of publication and mention
of the grant of the patent:
**11.09.2002 Bulletin 2002/37**

(51) Int Cl.$^7$: **F16H 55/17**, F16H 7/06,
F16H 55/30

(21) Application number: **97908640.2**

(22) Date of filing: **23.01.1997**

(86) International application number:
**PCT/US97/01494**

(87) International publication number:
**WO 97/027411 (31.07.1997 Gazette 1997/33)**

(54) **ROLLER CHAIN DRIVE SYSTEM HAVING IMPROVED NOISE CHARACTERISTICS**

ROLLENKETTEANTRIEBSVORRICHTUNG MIT VERBESSERTEM GERÄUSCHVERHALTEN

SYSTEME D'ENTRAINEMENT A CHAINE A ROULEAUX MOINS BRUYANT

(84) Designated Contracting States:
**DE ES FR GB IT**

(30) Priority: **23.01.1996 US 1043 P**
**29.05.1996 US 1838 P**
**23.01.1997 US 787675**

(43) Date of publication of application:
**14.10.1998 Bulletin 1998/42**

(73) Proprietor: **CLOYES GEAR & PRODUCTS, INC.
Mentor, OH 44061-0540 (US)**

(72) Inventor: **YOUNG, James, D.
Chesaning, MI 48616 (US)**

(74) Representative:
**Walker, Antony James Alexander et al
W.P. Thomson & Co.,
Kings Building,
South Church Side
Hull, HU1 1RR (GB)**

(56) References cited:
FR-A- 2 325 804         GB-A- 546 434
GB-A- 1 276 128         US-A- 2 382 740
US-A- 3 495 468         US-A- 5 318 483

## Description

This invention relates to roller chain drives for use in automotive engine chain drive systems that reduces the noise level normally associated with chain drives. More particularly, the invention is directed to a roller chain sprocket having an asymmetrical tooth profile that attempts to minimize the impact noise generated by the chain-sprocket collision during meshing.

While the invention is particularly directed to the art of roller chain sprockets for use in automotive engine camshaft drive applications, and thus will be described with specific reference thereto, it will be appreciated that the invention may have utility in other fields and applications.

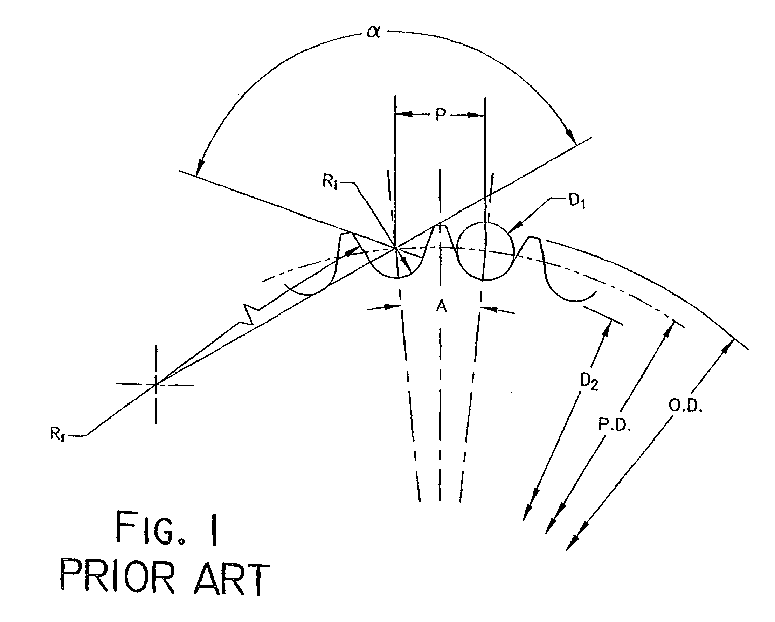

Roller chain sprockets used in camshaft drives for automotive engines are typically manufactured to the International Standard ISO 606-1994 (E). As shown in Fig. 1, the ISO 606 tooth profile is symmetrical with respect to the tooth space and has a constant root or roller seating radius $R_i$ extending from one tooth flank to the adjacent tooth flank. A chain with a link pitch P has rollers of diameter $D_1$ in contact with a sprocket having a chordal pitch of P, a root diameter $D_2$ and Z number of teeth. The tooth flank radius $R_f$, pitch circle diameter P. D., tip diameter O.D., tooth angle A (equal to $360°/Z$) and roller seating angle $\alpha$ further define the ISO 606 sprocket.

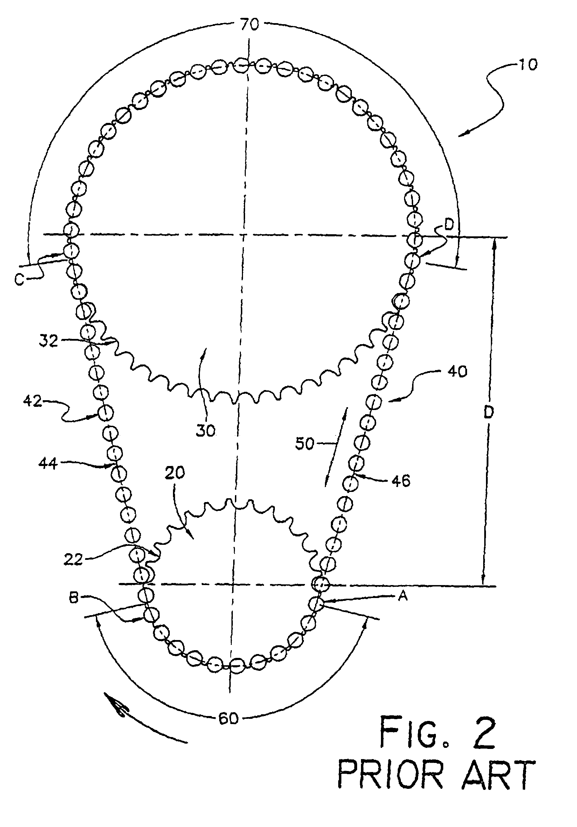

Fig. 2 shows a typical cam-in-block ISO standard chain drive system, without a tensioner or chain guide, rotating in a clockwise direction. The chain drive system **10** is comprised of a 25-tooth drive sprocket **20,** a 50-tooth driven sprocket **30** and roller chain **40** having rollers **42**. The roller chain **40** engages and wraps about sprockets **20** and **30** and has two spans extending between these sprockets, slack strand **44** and taut strand **46.** The chain is under tension as shown by arrows **50,** and distance D separates the centers of sprockets **20** and **30.**

It is believed that a worn chain meshing with an ISO standard sprocket will have only one roller in driving contact and loaded at a maximum loading condition. This contact at maximum loading occurs as the roller enters the drive sprocket wrap **60** at engagement, shown in Fig. 2 as engaging roller A. The loading for roller A is composed primarily of the meshing impact loading and a major part of the chain tension **50** loading. The next several rollers in the wrap **60** forward of roller A share in the chain tension loading, but at a progressively decreasing rate. This loading of the roller A (and to a lesser extent for the next several rollers in the wrap) serves to maintain a solid or hard contact of the roller with the sprocket tooth surface. Roller B, the last roller in the drive wrap **60** just prior to entering the slack strand **44,** will also be in hard contact with drive sprocket **20,** but at some point higher up on the root surface **22**. With exception of rollers A and B, and the several rollers following roller A that share the chain tension loading, the remaining rollers will not be in hard contact with the sprocket teeth and will be free to vibrate against the sprocket tooth surface as they travel around the wrap, contributing to the broadband mechanical noise level.

For the driven sprocket **30,** the last roller in the wrap before it enters the taut strand, roller D in Fig. 2, is the roller in driving contact with the sprocket **30** at a maximum loading condition. And similar to the last roller in the drive sprocket wrap **60,** roller B, engaging roller C will be in hard contact with the root radius **32** of driven sprocket **30**, but generally not at the root diameter.

It is known that a system such as that shown in Fig. 2 will gradually wear during ordinary use. This wear is comprised of sprocket tooth face wear and chain wear. Chain wear can be characterized as pitch elongation. Since a worn chain has an increased pitch length, a corresponding increase in the sprocket pitch diameter is a preferred interface for a worn chain.

Chain drive systems, including those using the ISO 606 sprocket, have several components of undesirable noise. A major component of chain drive noise is the noise generated as the chain roller leaves the span and collides with the sprocket during meshing. At meshing, the roller will have a radial impact component as it collides with the sprocket tooth at its root, and a tangential impact component as it collides with the engaging tooth flank. It is appreciated that the loudness of the impact noise will be a function of the impact energy that must be absorbed during meshing. This impact energy is related to engine speed, chain mass, and the chain-sprocket engagement geometry, of which the engaging flank pressure angle is a major factor. The resultant meshing impact sound is repeated with a frequency generally equal to that of the frequency of the chain meshing with the sprocket.

Another source of chain drive noise is the broadband mechanical noise caused in part by shaft torsional vibrations and slight dimensional inaccuracies between the chain and the sprockets. Contributing to a greater extent to broadband noise level is the intermittent or vibrating contact between the unloaded rollers and the sprocket teeth as the rollers travel around the wrap.

It is known that providing tooth space clearance between sprocket teeth promotes hard contact between the chain rollers and sprocket in the sprocket wrap, even as the chain wears. This has the effect of reducing broadband mechanical noise component of the overall chain drive system noise. Adding tooth space clearance between sprocket teeth does not, however, reduce chain drive noise caused by the impact of roller-sprocket engagement.

Accordingly, there is a need for a chain drive system that will reduce the noise caused by the impact of the chain rollers during sprocket engagement. The present invention satisfies this and other needs associated with conventional chain drive systems. For example, the present invention will utilize an asymmetrical tooth profile with a decreased pressure angle for the engaging flank to reduce the roller-sprocket tangential impact force and the resultant noise level associated with the tangential roller impact. This asymmetrical tooth profile will also utilize a reduced roller seating angle at the disengaging flank to promote faster roller-sprocket separation as the roller exits the sprocket wrap. This reduced roller seating angle will also beneficially maintain the rollers in solid or hard contact with the sprocket tooth surface while the rollers are in the wrap, thereby contributing to a reduced broadband mechanical noise level. For the preferred embodiments of the present invention, an inclined root surface is used to incorporate tooth space clearance to beneficially reduce the roller-sprocket radial impact force and the resultant noise level associated with radial roller impact. The inclined root surface will also beneficially maintain the roller-sprocket hard contact even as the chain pitch elongates with wear, further contributing to a reduced broadband mechanical noise level. Other needs satisfied by the present invention will become apparent to the skilled artisan from the discussion of the preferred embodiments.

In Figs. 1 and 2 of GB-546434 there is shown a roller chain sprocket having an asymmetrical tooth profile, each sprocket tooth comprising an engaging flank, a disengaging flank opposite to the engaging flank of an adjacent tooth and an inclined root surface tangent to root radii that are disposed between the engaging and disengaging flanks of adjacent teeth.

While there are no roller seating angles $\alpha$ or $\beta$ shown or discussed in GB-546434, it is clear that an engaging side roller seating angle $\beta$ for the engaging flank is less than the disengaging side roller seating angle $\beta'$ for the disengaging flank.

US-A-2382740 discloses a multi-piece sprocket wheel for use with chains of the type employed for elevating and conveying materials (in contrast to automotive timing chain applications). The sprocket wheel is formed from four separate members that are removably secured together. More particularly, two flank disks are secured together by bolts and then adjustably mounted to two semi-circular plates to form the sprocket. Each semi-circular plate includes a plurality of teeth that incorporate a multiple pitch design. That is, when the sprocket is rotated in one direction the bars of the chain seat on a first pitch diameter within the tooth spaces. When the sprocket is rotated in the opposite direction, the bars seat at a second pitch diameter within the tooth spaces.

Initially, the sprocket is configured in a bar chain drive system to rotate in the first direction. However, when the chain becomes materially worn, the toothed sectors of the sprocket are interchanged with semi-circular plates associated with a different sprocket (positioned at the opposing end of the chain) to, in effect, cause the teeth to face in the opposite direction and act as if rotated in the second direction. The increased chain pitch is thereby accommodated and the increased pitch diameter takes up all the slack in the worn chain.

The principal object of this invention is to provide a roller chain and sprocket drive system that reduces noise levels normally associated with chain drives by reducing the chain-sprocket engagement impact energy as the sprocket collects the rollers from the span.

According to a first aspect of the present invention there is provided a one-piece unidirectional (roller chain) sprocket including a plurality of sprocket teeth each having an engaging side and a disengaging side a first tooth engaging side cooperating with an adjacent tooth disengaging side to define an asymmetrical tooth space for receiving a roller of an associated roller chain, characterised in that the asymmetrical tooth space is defined by an engaging side roller seating angle ($\beta$) that is greater than a disengaging side roller seating angle ($\beta'$).

According to a second aspect of the present invention there is provided a unidirectional roller chain drive system comprising:

a one-piece driving sprocket having a plurality of sprocket teeth each having an engaging side and a disengaging side a first tooth engaging side cooperating with an adjacent tooth disengaging side to define a first asymmetrical tooth space;

a one-piece driven sprocket having a plurality of sprocket teeth each having an engaging side and a disengaging side, a first tooth engaging side cooperating with an adjacent tooth disengaging side to define a second asymmetrical tooth space; and

a roller chain having rollers in engaging contact with the said driving sprocket and the driven sprocket, characterised in that

at least one of the first asymmetrical tooth space and the second asymmetrical tooth space being defined by an engaging side roller seating angle ($\beta$) that is greater than a disengaging side roller seating angles ($\beta'$).

In one aspect of the invention, the optimized engaging flank pressure angle is beneficially decreased to reduce the tangential roller engagement force, thereby reducing the chain mesh impact noise contribution to the overall noise level.

In another aspect of the invention, the inclined root surface defines an increasing or "uphill" root surface moving from the engaging flank of one tooth to the disengaging flank of the adjacent tooth.

In another aspect of the invention, the inclined root surface defines a decreasing or "downhill" root surface moving from the engaging flank of one tooth to the disengaging flank of the adjacent tooth.

In another aspect of the invention, the roller seating angle for the disengaging side is optimally reduced to promote faster separation of the roller from the sprocket as the roller leaves the sprocket to enter the span. It is also believed that this feature promotes hard contact between the rollers and the sprocket.

In another aspect of the invention, tooth space clearance enables the rollers of a chain to maintain hard contact with the sprocket teeth as the rollers travel around the wrap, thereby reducing the broadband mechanical noise generated by the chain drive.

Another advantage of the invention is that as the chain wears and the chain pitch elongates, the inclined root surface serves to move the roller radially outward, effectively locating the roller closer to the preferred pitch circle.

Another advantage of the invention is that for a sprocket incorporating the "uphill" root surface feature, the inclined root surface requires less tooth thinning for the same amount of tooth space clearance.

Another advantage of the invention is that for a given quantity of tooth space clearance and associated tooth thickness for a sprocket incorporating the "uphill" root surface feature, the asymmetrical tooth profile design will be stronger than tooth space clearance for conventional sprockets, which use a constant root diameter.

Another advantage of the invention is that the asymmetrical sprocket tooth profile with the downhill inclined surface reduces the radial reaction force, thereby reducing the roller radial impact mesh noise contribution to the overall noise level.

Further scope of the applicability of the present invention will become apparent from the detailed description provided below. It should be understood, however, that the detailed description and specific examples, while illustrating preferred embodiments of the invention, are given by way of illustration only, since various changes and modifications within the spirit and scope of the invention will be apparent to those skilled in the art.

## Description of the Drawings

The present invention exists in the construction, arrangement and combination of various elements, whereby the objects contemplated are attained as hereinafter more fully set forth, specifically pointed out in the claims, and illustrated in the accompanying drawings in which:

Fig. 1 is a front view of selected portions of the ISO 606 conventional roller chain sprocket tooth profile;
Fig. 2 is a front view of a conventional cam-in-block chain drive system without a tensioner or guide chain;
Fig. 3 illustrates the variables considered in determining the impact energy that must be absorbed at the onset of roller and sprocket meshing;
Table 1 shows maximum and minimum roller seating and pressure angles for several ISO roller chain sprockets;
Fig. 4 shows selected portions of a 25-tooth ISO sprocket at maximum material conditions with a roller coming into engagement with the sprocket;
Fig. 5 shows selected portions of an asymmetrical profile for a 25-tooth driving sprocket in accordance with the present invention having an "uphill" inclined root surface that fits within the ISO profile envelope;
Fig. 5a shows the pitch circle and pitch polygon for the sprocket of Fig. 5;
Fig. 5b shows selected portions of an asymmetrical tooth profile for a 25-tooth sprocket in accordance with the present invention without the inclined root surface feature;
Fig. 6 shows an asymmetrical profile for a 25-tooth driving sprocket in accordance with the present invention having an "uphill" inclined root surface that is outside the ISO envelope;
Fig. 6a shows selected portions of an asymmetrical profile for a 25-tooth driving sprocket in accordance with the present invention having an "uphill" inclined root surface that is outside the ISO envelope;
Fig. 7 illustrates a chain wrap associated with an 18-tooth driving sprocket engaged with a chain having an elongated pitch;
Fig. 7a illustrates an enlarged view of the block shown in phantom lines in Fig. 7;
Fig. 8 shows selected portions of an asymmetrical profile for a 25-tooth driving sprocket in accordance with the present invention having a "downhill" inclined root surface;
Fig. 9 shows selected portions of an asymmetrical profile for a 50-tooth driven sprocket in accordance with the present invention having an "uphill" inclined root surface feature;
Fig. 10 illustrates a chain wrap associated with a 36-tooth driven sprocket;
Table 2 shows pressure angles of various tooth profiles in relation to roller seating angles;
Fig. 11 graphically illustrates, for several 25-tooth sprockets, the impact energy that must be absorbed during chain engagement as a function of engine speed;
Fig. 12 shows a cam-in-block camshaft chain drive system using asymmetrical tooth profile sprockets in a 25/50-tooth combination;
Fig. 13 shows a chain drive system using asymmetrical tooth profile sprockets in a 42/21-tooth combination; and
Fig. 14 shows another chain drive system using asymmetrical tooth profile sprockets in a 42/21-tooth combination.

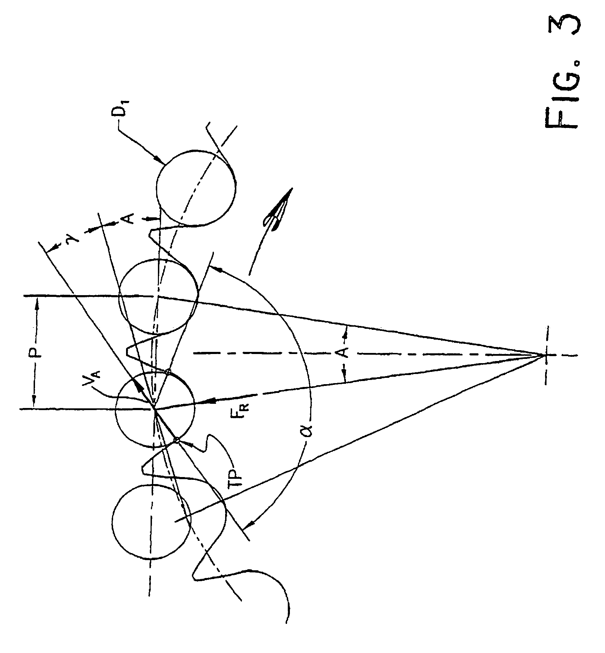

Referring now to the drawings, which are for purposes of illustrating the preferred embodiments of the invention only and not for purposes of limiting the same, Fig. 3 shows variables that affect roller-sprocket impact noise. Specifically, this impact noise is a function of the roller impact energy $E_A$ (in Nm) that must be absorbed during chain and sprocket engagement:

$$E_A = \frac{wP}{2000} \, V_A{}^2,$$

where

$$V_A = \frac{\pi \, n \, P}{30000} \, \sin\left(\frac{360}{Z} + \gamma\right),$$

$$\gamma = \frac{180 - A - \alpha}{2},$$

and

| | |
|---|---|
| $V_A =$ | Roller Impact Velocity [m/s] |
| $\gamma =$ | Pressure Angle |
| $n =$ | Engine Speed [RPM] |
| $W =$ | Chain Mass [Kg] |
| $Z =$ | Number of Sprocket Teeth |
| $A =$ | Tooth Angle (360°/Z) |
| $\alpha =$ | Roller Seating Angle |
| $P =$ | Chain Pitch (Chordal Pitch) |

The $E_A$ equation presumes the chain drive kinematics will conform generally to a quasi-static analytical model and that the roller-sprocket driving contact will occur at the tangency point TP for the flank and root radii as the sprocket collects a roller from the span.

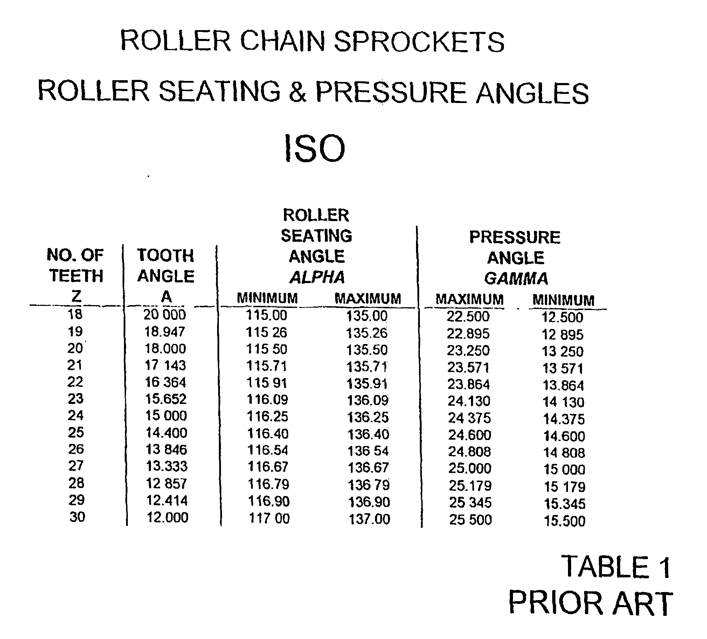

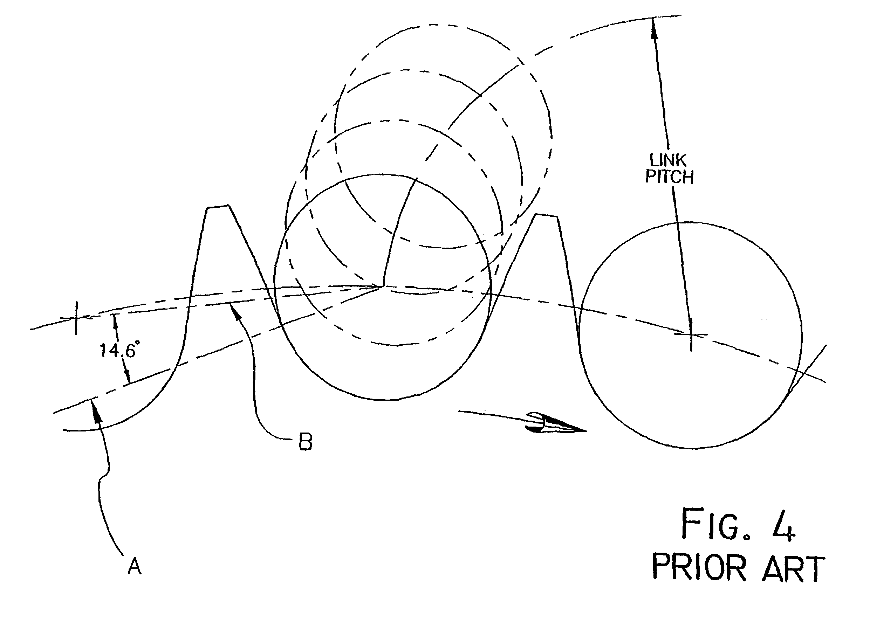

It is appreciated that reducing the pressure angle $\gamma$ of the sprocket improves the noise, vibration, and harshness (NVH) characteristics associated with the chain drive. Table 1 shows, for several ISO sprockets, the maximum and minimum pressure angles $\gamma$ as a function of tooth angle A and maximum and minimum roller seating angles $\alpha$. One example, graphically illustrated in Fig. 4, shows a symmetrical 25-tooth maximum ISO sprocket having a minimum pressure angle $\gamma$ of 14.6° at the point of engagement for the meshing roller. The pressure angle is measured relative to a line A extending from the center of the engaging roller through the center of the flank radius, and a line B connecting the centers of the fully seated roller and the engaging roller in its fully seated position on theoretical pitch.

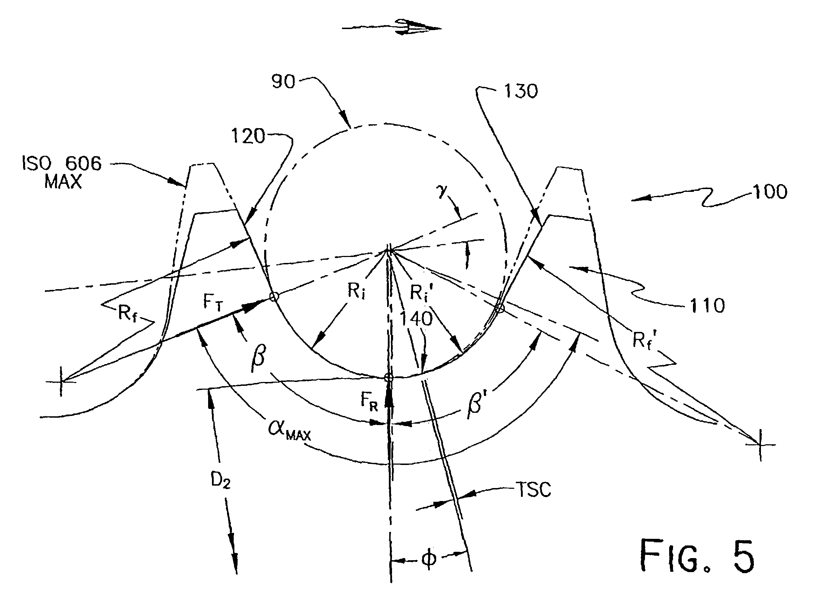

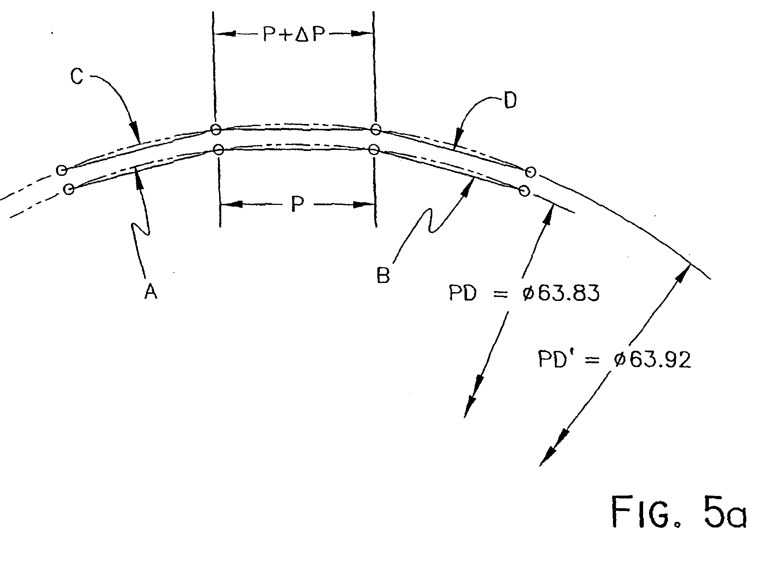

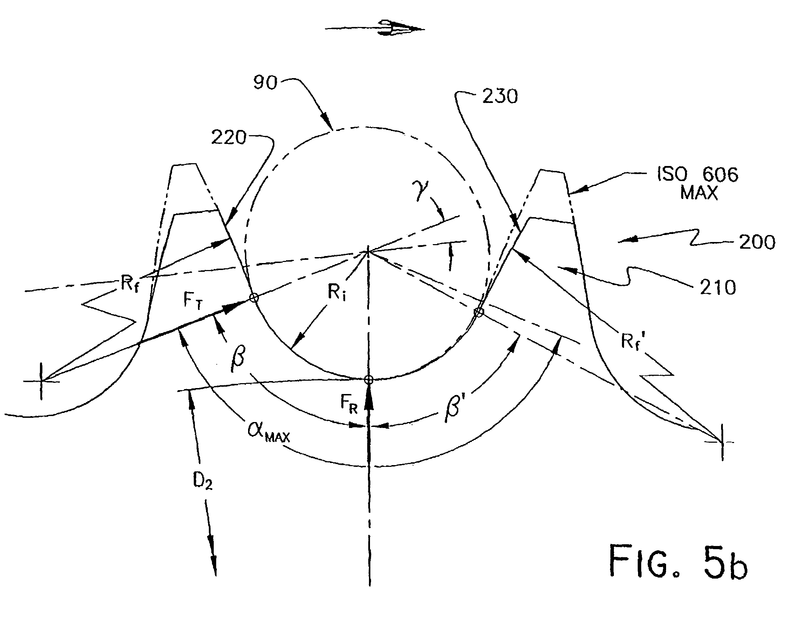

Fig. 5 shows selected portions of an asymmetrical profile for a 25-tooth driving sprocket **100** of the present invention collecting a roller **90** from the taut strand of a roller chain (not shown). Each tooth **110** of sprocket **100** has an engaging flank **120** and a disengaging flank **130**. The roller **90** enters into engagement with the sprocket **100** and seats on the root defined by roller seating radius $R_i$. The engaging flank radius $R_f$ and the roller seating radius $R_i$ that is tangent to it satisfy the ISO 606 tooth profile specifications. The ISO symmetrical profile and the asymmetrical engaging side profile of the present embodiment are identical at maximum material conditions. As such, a maximum roller seated at the root diameter $D_2$ would have its center on the theoretical pitch circle.

Roller seating radius $R_i$ is also tangent to an inclined root surface **140,** which defines a tooth space clearance TSC. Inclined root surface **140** is a flat surface of a finite length that can be inclined at any angle $\phi$ needed to satisfy a specific geometry or to compensate for a given amount of pitch elongation. Inclined root surface angle $\phi$ is measured from a line passing through the arc center of $R_i$ and the sprocket center to a second line passing through that arc center and normal to the lower edge of inclined root surface **140.** The disengaging flank roller seating or root radius $R_i'$ is also tangent to the inclined root surface **140**.

As shown in Fig. 5a, when roller **90** is positioned at the upper end of the inclined or "uphill" root surface **140,** its center defines a new pitch circle that is greater than the theoretical pitch circle. While root radii $R_i$ and $R_i'$ will typically have the same magnitude in this arrangement, the engaging flank radius $R_f$ and disengaging flank radius $R_f'$ may have different values.

Referring again to Fig. 5, engaging side roller seating angle $\beta$ and disengaging side roller seating angle $\beta'$ replaces the symmetrical ISO roller seating angle $\alpha$. The tolerances for angles $\beta$ and $\beta'$ are beneficially reduced such that the total tolerance for $\beta$ and $\beta'$ does not exceed one-half the tolerance for ISO roller seating angle $\alpha$. A maximum value for angle $\beta$ will be equal to the ISO $\alpha_{max}/2$, where $\alpha_{max}$ = 140° - 90°/Z, or 136.4° for a 25-tooth sprocket. Likewise, a minimum value for angle $\beta'$ will equal ISO $\alpha_{min}/2$, where $\alpha_{min}$ = 120° - 90°/Z.

For the sprocket geometry illustrated in Fig. 5, pressure angle $\gamma$ is related to $\beta$. For the drive side profiles of this 25-tooth drive sprocket 100, the ISO maximum (shown in phantom lines) and the asymmetrical maximum are identical and overlap when rotated into alignment. However, as shown in Fig. 5, the outside diameter of the asymmetrical sprocket 100 is truncated.

As with the pressure angle $\gamma$, the tangential impact force component $F_T$ (but not the radial impact force $F_R$) shown in Fig. 5 is proportional to the roller impact velocity $V_A$. According to the present invention, a maximum engaging side roller seating angle $\beta$ will minimize the pressure angle $\gamma$ at chain engagement for the tooth collecting the roller from the span. This will also reduce the tangential impact force component $F_T$ and thus the impact noise contribution to the overall noise level.

It is believed to be advantageous to have a maximum value for angle $\beta'$, which is equal to $\alpha_{min}/2$. This reduced seating angle $\beta'$ promotes faster separation when the roller leaves the sprocket and enters the span. Accordingly, disengaging side roller seating angle $\beta'$ is shown to be a minimum angle.

Fig. 5a shows a portion of a pitch circle A and related pitch polygon B for a theoretical pitch (maximum) P sprocket. It also shows the pitch circle C and pitch polygon D for a sprocket with a slightly longer chordal pitch P+ΔP, demonstrating the preferred sprocket interface for a worn chain. The amount that the pitch circle increases when the roller 90 is seated on the root radius $R_i'$ is a function of the inclined root surface angle ø and the amount of tooth space clearance TSC.

Fig. 5b shows a further embodiment of the present invention, sprocket 200. In this embodiment, the sprocket 200 does not have the inclined root surface or tooth space clearance of the embodiment shown in Fig. 5.

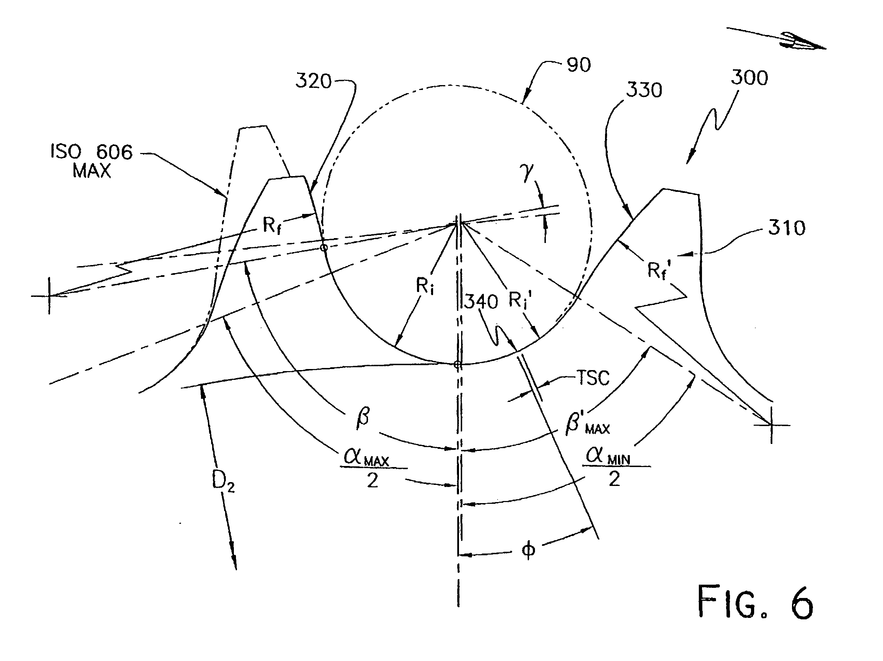

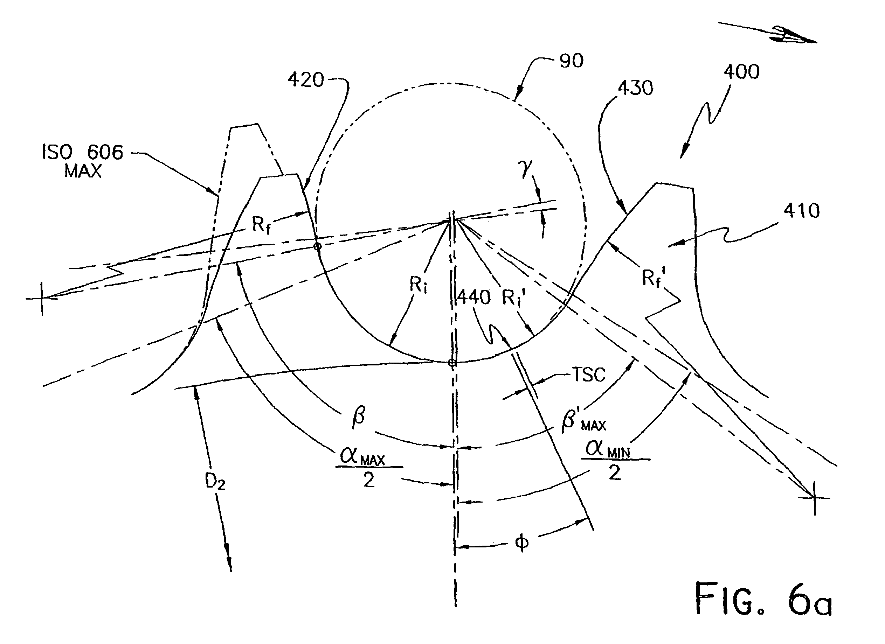

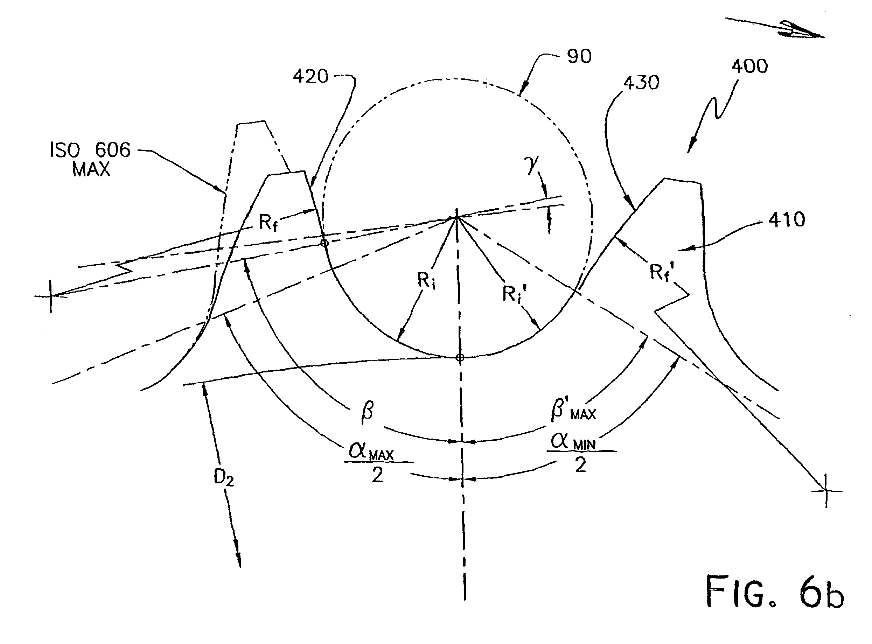

Fig. 6 shows selected portions of a 25-tooth asymmetrical driving sprocket **300** according to the present invention that is outside the ISO specifications. Specifically, in this embodiment, angle β is greater than $\alpha_{max}/2$. A maximum value for angle β' for the adjacent tooth, shown in Fig. 6 as $\beta'_{max}$, is equal to $\alpha_{min}/2$. This arrangement produces improved NVH characteristics, as the pressure angle γ, and thus the impact energy $E_A$ for the chain drive are reduced. In another embodiment, shown in Fig. 6a, a maximum value for β' for sprocket **400,** shown as $\beta'_{max}$, is less than $\alpha_{min}/2$. Like the sprocket **300** shown in Fig. 6, sprocket **400** of Fig. 6a also falls outside the ISO specifications.

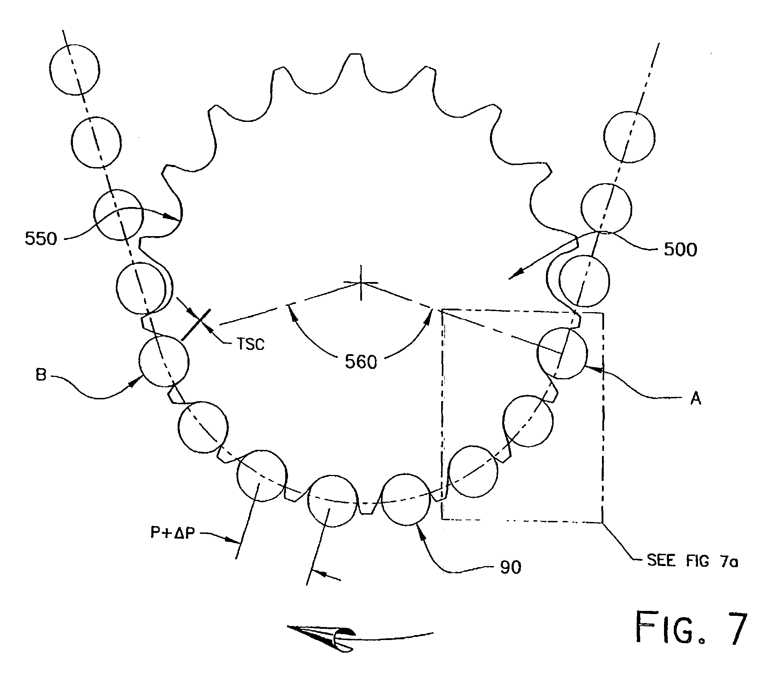

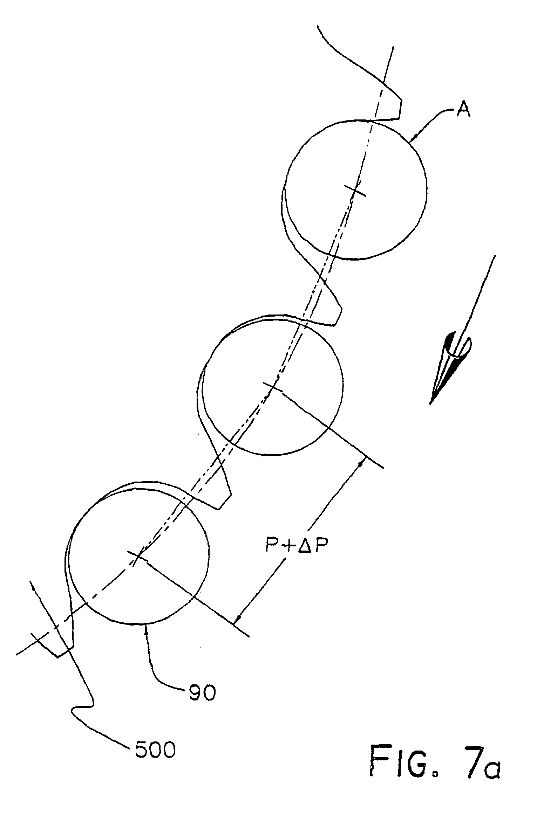

Fig. 7 shows the roller chain wrap for an asymmetrical profile for a 25-tooth driving sprocket **500** in a 25/50-tooth sprocket chain drive system. A new chain at theoretical pitch would have all rollers **90** in contact with the root surfaces **550** of a max tooth-profile sprocket for the full wrap **560.** For a worn chain, only the first roller to engage such a sprocket, roller A, would be fully seated in driving contact and the remaining rollers in the wrap would progressively ride up the root surfaces **550.** The sprocket **500** of Fig. 7 provides tooth space clearance TSC to accommodate a specified degree of chain pitch elongation ΔP. In other words, the tooth space clearance TSC enables rollers of a worn chain to be maintained in hard contact with the inclined root surfaces of the sprocket teeth. Fig. 7a more clearly shows the progression of the rollers in the tooth spaces as the rollers travel around the sprocket **500** in the wrap.

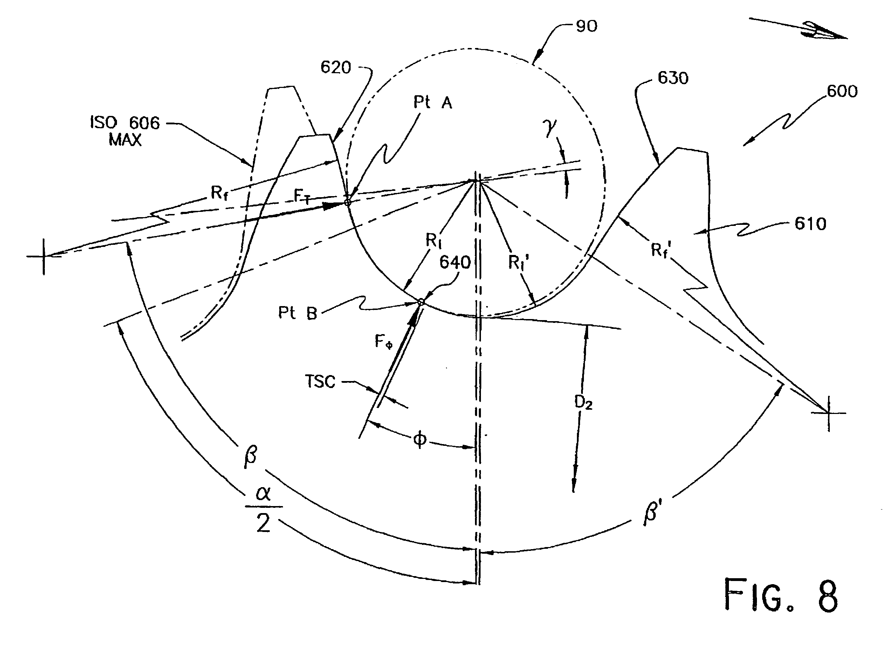

Thus far the invention with all of its advantages has been described as having an inclined root surface that is disposed radially outward in the direction of the sprocket's disengaging flank, or "uphill." In a more preferred embodiment, such as that shown in Fig. 8, the inclined root surface for the driving sprocket is reversed. Specifically, the inclined root surface **640** of driving sprocket **600** is disposed radially inward from the engaging flank **620** to the disengaging flank **630** of the tooth space, or "downhill." In other words, the inclined surface **640** defines a decreasing root surface.

Referring again to Fig. 1, the ISO standard sprocket captures the chain rollers in the valley of the root radius $R_i$ as the teeth and rollers mesh. Therefore, the rollers impact the root radius $R_i$ at the root diameter $D_2$, producing the radial reaction force $F_R$ shown in Fig. 3. The asymmetrical tooth profile incorporating a "downhill" inclined root surface provides for improved meshing at engagement. Specifically, the roller progression is downhill for a worn chain as its rollers travel around the wrap. In this arrangement, it is believed that the radial reaction force $F_R$ is reduced and a degree of damping will occur, with the chain link plates absorbing the difference between $F_R$ (ISO) and $F_\phi$, shown in Fig. 8.

The "downhill" inclined root feature would, however, move the sprocket pitch circle radially inward with chain wear. Accordingly, a greater amount of tooth space clearance is required to maintain hard roller contact (for the same chain pitch elongation compensation) than with the "uphill" root surface arrangement.

Referring again to Fig. 8, an asymmetrical profile for a 25-tooth "downhill" sprocket **600** according to the present invention is shown. The roller seating angle β of driving sprocket **600** is greater than the ISO $\alpha_{max}/2$ at a maximum material condition, and can be increased to the point where the pressure angle γ is equal to zero. Table 2 lists a second asymmetrical profile wherein γ is reduced to 1/4 of the ISO γ angle, which may be beneficial for some chain drive systems.

The roller **90** shown in Fig. 8 has its center on the theoretical pitch circle when it is in contact with the tooth surface at point B. The engaging roller seating radius $R_i$ may equal the disengaging roller seating radius $R_i'$ in conformity with the ISO standard. Accordingly, these radii would be slightly larger than a maximum roller radius. A further embodiment would have the roller center on the theoretical pitch diameter when the roller is seated on the root diameter $D_2$. Yet another embodiment would place the roller center on the theoretical pitch diameter when the roller contacts the root surface at some point between point B and $D_2$.

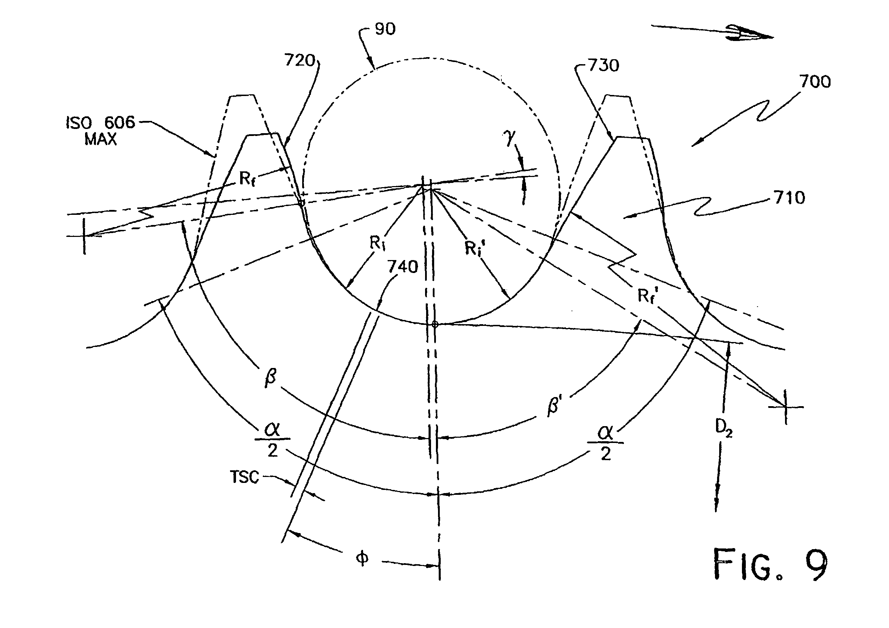

Fig. 9 shows an asymmetrical tooth profile for a 50-tooth driven sprocket **700** incorporating an "uphill" inclined root surface **740.** Whether the incline orientation is considered uphill or downhill is a function of the incline surface position with respect to the roller when the roller is in the driving contact. For the embodiment shown in Fig. 9, the inclined root surface is disposed radially outward from the disengaging (drive) flank **730** to the engaging flank **720.** Accordingly, the roller enters the driven sprocket wrap from the slack strand to a downhill incline which is advantageous for reduced radial impact, but the roller progression in the wrap as the chain wear occurs is radially outward in the preferred direction, or uphill, from the driving contact position.

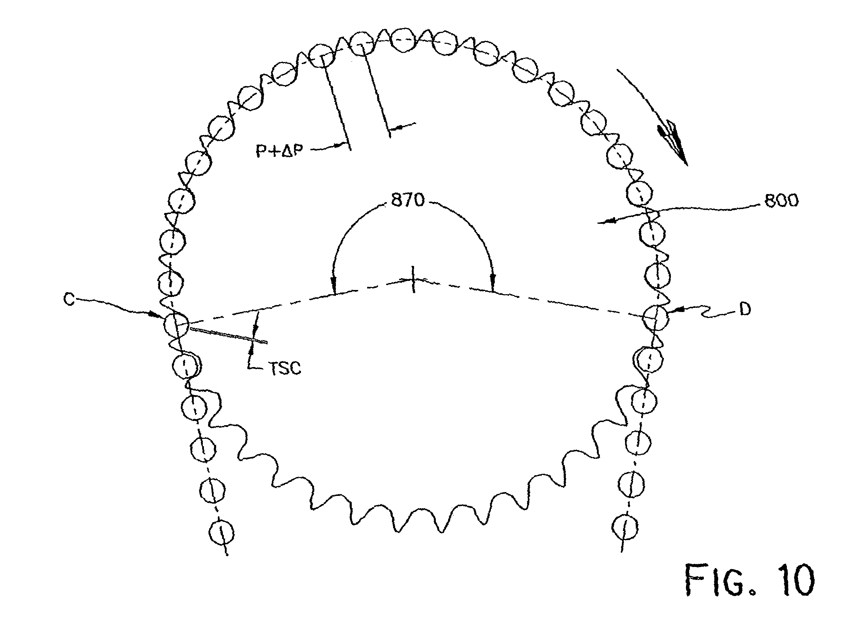

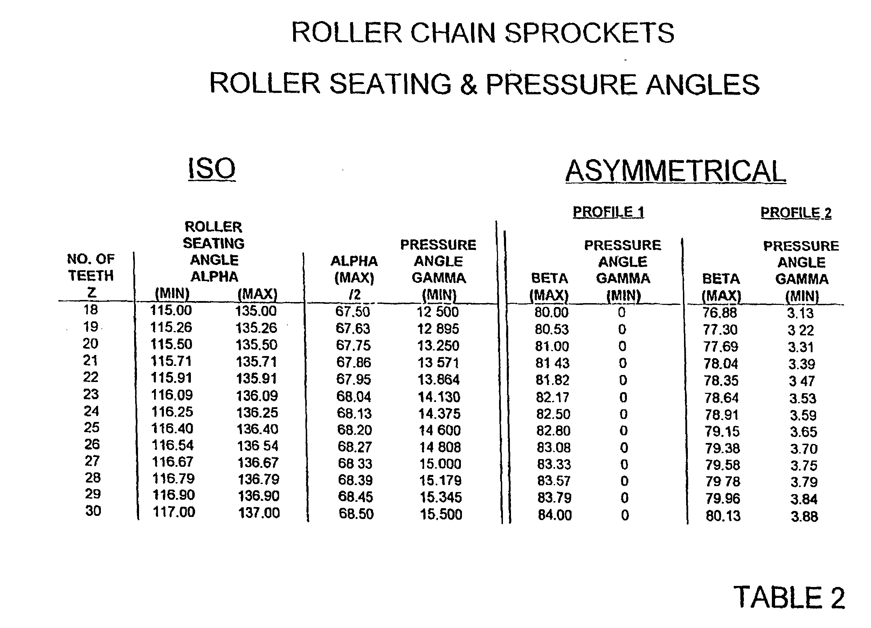

In the embodiment shown in Fig. 9, the engaging roller seating angle β is greater than $\alpha_{max}/2$, and the disengaging roller seating angle β' is less than $\alpha_{min}/2$. Roller **90** and coast flank **720** contact at the onset of engagement will theoretically occur only when chain wear is at the maximum chain pitch elongation ΔP. A new chain at theoretical pitch P would have all rollers in contact with root diameter $D_2$ of the sprocket **700** shown in Fig. 9 for a max material sprocket. Fig. 10 shows the wrap angle **870** for a 36-tooth driven sprocket **810** with tooth space clearance TSC in a 18/36-tooth sprocket chain drive system. Fig. 10 also shows the corresponding chain pitch elongation ΔP that can be accommodated.

Table 2 lists the maximum and minimum ISO roller seating angle α for several sprockets as well as the engaging side roller seating angle β for two families of asymmetrical profiles according to the subject invention. These profiles are described according to the number of sprocket teeth, the drive side roller seating angle β and pressure angle γ, and are in juxtaposition with the ISO standard profiles. The asymmetrical profiles are merely illustrative of sprockets according to the present invention; therefore, alternative sprockets having other profiles may have better NVH characteristics for a specific drive. However, empirical analysis demonstrates that engagement noise levels decrease for the asymmetrical profiles as the pressure angle γ is reduced from the ISO standard.

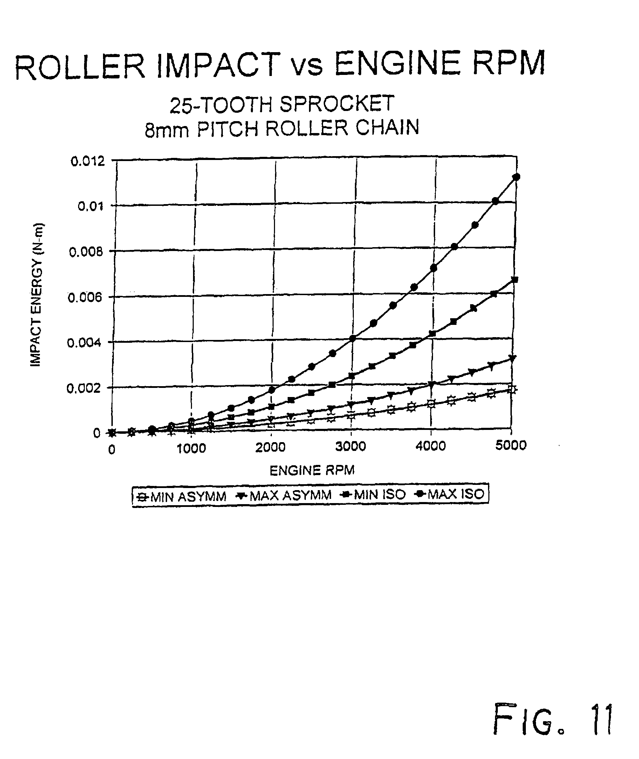

Fig. 11 graphically illustrates the impact energy $E_A$ as a function of engine speed during the engagement of an 8mm pitch roller chain to a 25-tooth sprocket. The four $E_A$ curves shown are for ISO maximum and minimum pressure angles, and asymmetrical maximum and minimum pressure angles. These curves represent the theoretical case for maximum and minimum material sprockets and a chain at theoretical pitch. The maximum impact energy level for the asymmetrical (MAX ASYM) profile is less than the ISO maximum (MAX ISO) as well as the ISO minimum (MIN ISO).

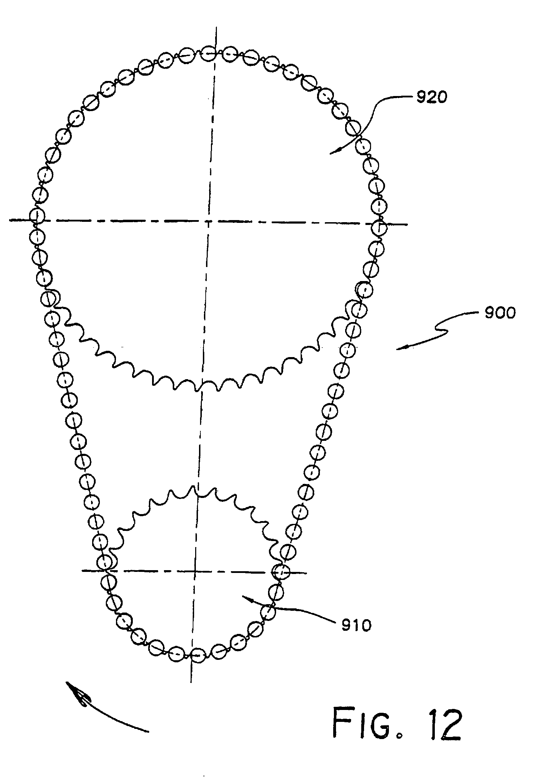

Fig. 12 shows a typical cam-in-block camshaft chain drive system **900** using asymmetrical tooth profile sprockets in a 25/50-tooth sprocket combination. The 25-tooth drive sprocket **910** for this chain drive arrangement is fastened to a crankshaft and, accordingly, runs at crankshaft speed. The 50-tooth driven sprocket **920**, which is fastened to a camshaft, runs at half-crankshaft speed.

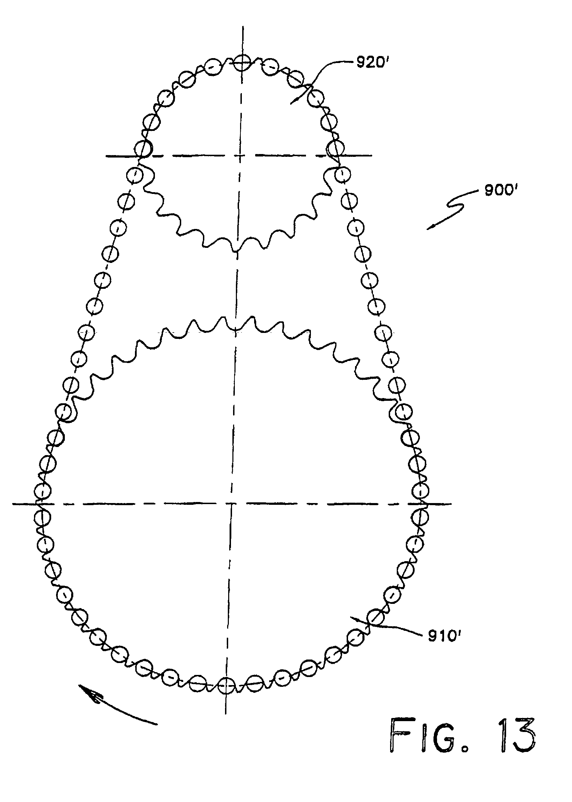

Another chain drive application for asymmetrical-profile sprockets is a balance shaft drive **900'** as shown in Fig. 13. The 42-tooth drive sprocket **910'** is fastened to a crankshaft. The 21-tooth driven sprocket **920'** is fastened to the balance shaft, and will, therefore, run at twice crankshaft speed. In this arrangement, the driven shaft will normally drive a second counter-rotating balance shaft through a 1:1 gear drive.

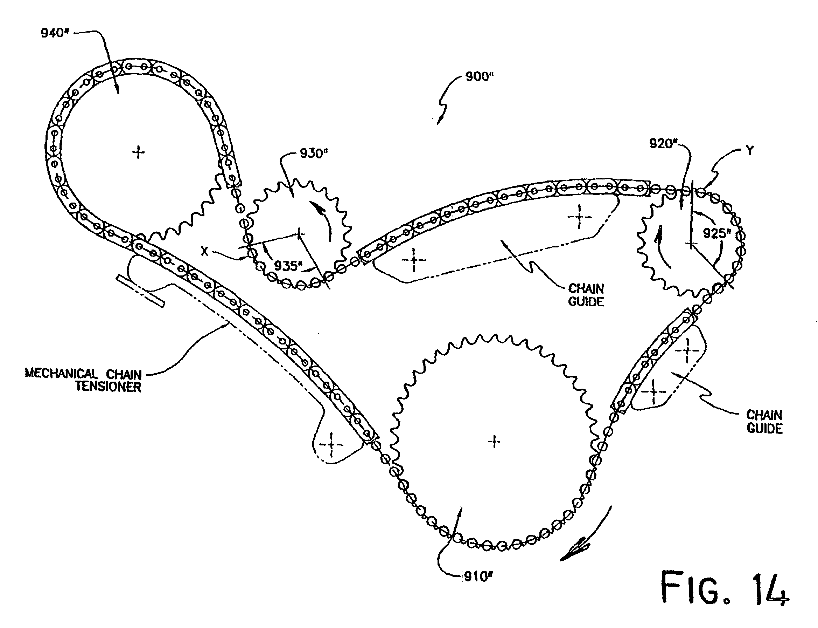

Fig. 14 shows another typical balance shaft drive 900" using the same 42/21-tooth sprocket combination in a 4-sprocket chain drive system, which uses an idler sprocket 940" to achieve the reverse rotation of the balance shafts. The counter-rotating balance shafts 920" and 930", running at twice crankshaft speed, serve to balance the second order free (out-of-balance) forces for an in-line 4-cylinder engine. Rollers X and Y are the engaging rollers for the right hand and left hand balance shaft sprockets 930" and 920", respectively. It is preferable not to have roller engagement occurring at the same instant, and this can be managed by slightly changing the chain geometry by increasing or decreasing the chain strand offset between the two sprockets, for instance. Although the 21-tooth sprockets 930" and 920" contribute a greater degree to the overall noise levels, all 4 sprockets contribute as a consequence of roller-sprocket meshing. So, it is preferable to design the drive to stagger the roller meshing for all the sprockets.

The tooth profile features shown and described above can be altered slightly without substantially deviating from the chain and sprocket meshing kinematics that produce the noise reduction advantages with this invention. For example, slight changes to the profile might be done for manufacturing, quality control reasons, or to improve part dimensioning. These changes are within the scope of the invention as disclosed herein.

## Claims

1. A one-piece unidirectional roller chain sprocket including a plurality of sprocket teeth (110, 210, 310, 410, 610, 710) each having an engaging flank (120, 220, 320, 420, 620, 720) and a disengaging flank (134, 230, 330, 430, 630, 730), a first tooth engaging flank cooperating with an adjacent second tooth disengaging flank to define an asymmetrical tooth space for receiving a roller (90) of an associated roller chain, **characterised in that** the asymmetrical tooth space is defined by an engaging side roller seating angle (β) that is greater than a disengaging side roller seating angle (β').

2. A sprocket according to claim 1, further **characterised in that** the asymmetrical tooth space is further defined by a root radius having a first end tangent to a radially inner end of the first tooth engaging flank (120, 220, 320, 420, 620, 720) and a second end tangent to a radially inner end of the adjacent second tooth disengaging flank (130, 230, 330, 430, 630, 730), and that the engaging flank roller seating angle (β) defines a first arc segment of the root radius and the disengaging flank roller seating angle (β') defines a second arc segment of the root radius.

3. A sprocket according to claim 1, further **characterised in that** the asymmetrical tooth space is further defined by a first root radius ($R_i$) having a first end tangent to the first tooth engaging flank (120, 320, 420, 620, 720) and a second end tangent to a flat root surface (140, 340, 440, 640, 740), and a second root radius ($R_i'$) having a first end tangent to the adjacent second tooth disengaging flank (130, 330, 430, 630, 730) and a second end tangent to the flat root surface, the flat root surface (140, 340, 440, 640, 740) providing tooth space clearance to facilitate maintaining the roller in hard contact with the sprocket during rotation thereof.

**4.** A sprocket according to claim 3, further **characterised in that** the flat root surface (140, 340, 440, 640, 740) extends radially outward toward the first tooth engaging flank (120, 320, 420, 620, 720).

**5.** A sprocket according to claim 3, further **characterised in that** the flat root surface (140, 340, 440, 640, 740) extends radially outward toward the adjacent second tooth disengaging flank (130, 330, 430, 630, 730).

**6.** A sprocket according to any preceding claim, further **characterised in that** the asymmetrical tooth space is further defined by a first tooth engaging flank pressure angle ($\gamma$) that is less than or equal to a nominal ISO-606-1994 (E) pressure angle ($\gamma$).

**7.** A sprocket according to claim 1, further **characterised in that** the engaging side roller seating of angle ($\beta$) is greater than or equal to $\alpha_{NOMINAL}/2$, where $\alpha_{NOMINAL}$ is a nominal ISO-606-1994 (E) roller seating angle.

**8.** A sprocket according to claim 1, further **characterised in that** the engaging side roller seating angle ($\beta$) is greater than or equal to $\alpha_{NOMINAL}/2$ and less than or equal to $\alpha_{MAX}/2$, where, $\alpha_{NOMINAL}$ is a nominal ISO-606-1994 (E) roller seating angle and $\alpha_{MAX}$ is a maximum ISO-606-1994 (E) roller seating angle.

**9.** A sprocket according to claim 1 or 8, further **characterised in that** the disengaging side roller seating angle ($\beta'$) is less than or equal to $\alpha_{NOMINAL}/2$, where $\alpha_{NOMINAL}$ is a nominal ISO-606-1994 (E) roller seating angle.

**10.** A sprocket according to claim 1, 8 or 9, further **characterised in that** the disengaging side roller seating angle ($\beta'$) is less than or equal to $\alpha_{NOMINAL}/2$ and greater than or equal to $\alpha_{MIN}/2$, where $\alpha_{NOMINAL}$ is a nominal ISO-606-1994 (E) roller seating angle and $\alpha_{MIN}$ is a minimum ISO-606-1994 (E) roller seating angle.

**11.** A unidirectional roller chain drive system comprising:

a one-piece driving sprocket having a plurality of sprocket teeth (110, 210, 310, 410, 610, 710) each having an engaging flank (120, 220, 320, 420, 620, 720) and a disengaging flank (130, 230, 330, 430, 630, 730), a first tooth engaging flank cooperating with an adjacent second tooth disengaging flank to define a first asymmetrical tooth space;
a one-piece driven sprocket having a plurality of sprocket teeth (110, 210, 310, 410, 610, 710) each having an engaging flank (120, 220, 320, 420, 620, 720) and a disengaging flank (130, 230, 330, 430, 630, 730), a first tooth engaging flank cooperating with an adjacent second tooth disengaging flank to define a second asymmetrical tooth space; and
a roller chain having rollers in engaging contact with the said driving sprocket and the driven sprocket, **characterised in that** at least one of the first asymmetrical tooth space and the second asymmetrical tooth space being defined by an engaging side roller seating angle ($\beta$) that is greater than a disengaging side roller seating angles ($\beta'$).

**12.** A chain drive system according to claim 11, further **characterised in that** the at least one first asymmetrical tooth space and second asymmetrical tooth space is further defined by a root radius having a first end tangent to a radially inner end of the first tooth engaging flank (120, 220, 320, 420, 620, 720) and a second end tangent to a radially inner end of the adjacent second tooth disengaging flank (130, 230, 330, 430, 630, 730), and that the engaging flank roller seating angle ($\beta$) defines a first arc segment of the root radius and the disengaging flank roller seating angle ($\beta'$) defines a second arc segment of the root radius.

**13.** A chain drive system according to claim 11, further **characterised in that** the at least one first asymmetrical tooth space and second asymmetrical tooth space is further defined by a first root radius ($R_i$) having a first end tangent to the first tooth engaging flank (120, 320, 420, 620, 720) and a second end tangent to a flat root surface (140, 340, 440, 640, 740), and a second root radius ($R_i'$) having a first end tangent to the adjacent tooth disengaging flank (130, 330, 430, 630, 730) and a second end tangent to the flat root surface (140, 340, 440, 640, 740), the flat root surface providing tooth space clearance to facilitate maintaining the roller in hard contact with the respective sprocket during rotation thereof.

**Patentansprüche**

**1.** Einstückiges, einseitig wirkendes Rollenkettenzahnrad, das umfasst: eine Mehrzahl von Zahnradzähnen (110, 210, 310, 410, 610, 710) jeweils mit einer Eingriffsflanke (120, 220, 320, 420, 620, 720) und einer Ausrückflanke (130, 230, 330, 430, 630, 730), eine erste Zahneingriffsflanke, die mit einer angrenzenden zweiten Zahnausrückflanke zum Begrenzen einer asymmetrischen Zahnlücke zum Aufnehmen einer Rolle (90) einer zugehörigen Rollenkette zusammenwirkt, **dadurch gekennzeich-**

**net, dass** die asymmetrische Zahnlücke durch einen Eingriffsseitenrollen-Auflagerwinkel ($\beta$) begrenzt wird, der größer als der Ausrückseitenrollen-Auflagerwinkel ($\beta'$) ist.

2. Zahnrad nach Anspruch 1, weiter **dadurch gekennzeichnet, dass** die asymmetrische Zahnlücke ferner durch einen Fußradius mit einer ersten Endtangente zu einem radial inneren Ende der ersten Zahneingriffsflanke (120, 220, 320, 420, 620, 720) und einer zweiten Endtangente zu einem radial inneren Ende der angrenzenden zweiten Zahnausrückflanke (130, 230, 330, 430, 630, 730) definiert wird, und dass der Eingriffsflankenrollen-Auflagerwinkel ($\beta$) ein erstes Bogensegment des Fußradius definiert und der Ausrückflankenrollen-Auflagerwinkel ($\beta'$) ein zweites Bogensegment des Fußradius definiert.

3. Zahnrad nach Anspruch 1, weiter **dadurch gekennzeichnet, dass** die asymmetrische Zahnlücke ferner durch einen ersten Fußradius ($R_i$) mit einer ersten Endtangente zu der ersten Zahneingriffsflanke (120, 320, 420, 620, 720) und einer zweiten Endtangente zu einer flachen Fußfläche (140, 340, 440, 640, 740), und einen zweiten Fußradius ($R_i'$) mit einer ersten Endtangente zu der angrenzenden zweiten Zahnausrückflanke (130, 330, 430, 630, 730) und einer zweiten Endtangente zu der flachen Fußfläche definiert wird, wobei die flache Fußfläche (140, 340, 440, 640, 740) einen Zahnlückenzwischenraum schafft, um das Halten der Rolle in hartem Kontakt mit dem Zahnrad während Drehung desselben zu vereinfachen.

4. Zahnrad nach Anspruch 3, weiter **dadurch gekennzeichnet, dass** die flache Fußfläche (140, 340, 440, 640, 740) sich radial nach außen in Richtung auf die erste Zahneingriffsflanke (120, 320, 420, 620, 720) erstreckt.

5. Zahnrad nach Anspruch 3, weiter **dadurch gekennzeichnet, dass** die flache Fußfläche (140, 340, 440, 640, 740) sich radial nach außen in Richtung auf die angrenzende zweite Zahnausrückflanke (130, 330, 430, 630, 730) erstreckt.

6. Zahnrad nach einem vorhergehenden Anspruch, weiter **dadurch gekennzeichnet, dass** die asymmetrische Zahnlücke ferner durch einen ersten Zahneingriffsflanken-Eingriffswinkel ($\gamma$) definiert wird, der kleiner oder gleich einem ISO-606-1994 (E) Solleingriffswinkel ($\gamma$) ist.

7. Zahnrad nach Anspruch 1, weiter **dadurch gekennzeichnet, dass** die Eingriffseitenrollenlagerung des Winkels ($\beta$) größer oder gleich $\alpha_{Sollwert}/2$ ist, wobei $\alpha_{Sollwert}$ ein ISO-606-1994 (E)-Sollwert des Rollenauflagerwinkels ist.

8. Zahnrad nach Anspruch 1, weiter **dadurch gekennzeichnet, dass** der Eingriffseitenrollen-Auflagerwinkel ($\beta$) größer oder gleich $\alpha_{Sollwert}/2$ und kleiner oder gleich $\alpha_{MAX}/2$ ist, wobei $\alpha_{Sollwert}$ ein ISO-606-1994(E)-Sollwert des Rollenauflagerwinkels ist und $\alpha_{MAX}$ ein ISO-606-1994 (E)-Maximalwert des Rollenauflagerwinkels ist.

9. Zahnrad nach Anspruch 1 oder 8, weiter **dadurch gekennzeichnet, dass** der Ausrückseitenrollen-Auflagerwinkel ($\beta'$) kleiner oder gleich $\alpha_{Sollwert}/2$ ist, wobei $\alpha_{Sollwert}$ ein ISO-606-1994 (E)-Sollwert des Rollenauflagerwinkels ist.

10. Zahnrad nach Anspruch 1, 8 oder 9, weiter **dadurch gekennzeichnet, dass** der Ausrückseitenrollen-Auflagerwinkel ($\beta'$) kleiner oder gleich $\alpha_{Sollwert}/2$ und größer oder gleich $\alpha_{MIN}/2$ ist, wobei $\alpha_{Sollwert}$ ein ISO-606-1994 (E)-Sollwert des Rollenauflagerwinkels und $\alpha_{MIN}$ ein ISO-606-1994 (E)-Minimalwert des Rollenauflagerwinkels ist.

11. Einseitig wirkendes Rollenkettenantriebssystem, das umfasst:

    ein einstückiges Antriebszahnrad mit einer Mehrzahl von Zahnradzähnen (110, 210, 310, 410, 610, 710) jeweils mit einer Eingriffsflanke (120, 220, 320, 420, 620, 720) und einer Ausrückflanke (130, 230, 330, 430, 630, 730), einer ersten Zahneingriffsflanke, die mit einer angrenzenden zweiten Zahnausrückflanke zum Begrenzen einer asymmetrischen Zahnlücke zusammenwirkt;

    ein einstückiges angetriebenes Zahnrad mit einer Mehrzahl von Zahnradzähnen (110, 210, 310, 410, 610, 710) jeweils mit einer Eingriffsflanke (120, 220, 320, 420, 620, 720) und einer Ausrückflanke (130, 230, 330, 430, 630, 730), einer ersten Zahneingriffsflanke, die mit einer angrenzenden zweiten Zahnausrückflanke zum Begrenzen einer zweiten asymmetrischen Zahnlücke zusammenwirkt; und

    eine Rollenkette mit Rollen in eingreifendem Kontakt mit dem genannten Antriebszahnrad und dem angetriebenen Zahnrad, **dadurch gekennzeichnet, dass**

    wenigstens eine der ersten asymmetrischen Zahnlücke und der zweiten asymmetrischen Zahnlücke durch einen Eingriffsseitenrollen-Auflagerwinkel ($\beta$) begrenzt wird, der größer als der Ausrückseitenrollen-Auflagerwinkel ($\beta'$) ist.

**12.** Kettenantriebssystem nach Anspruch 11, weiter **dadurch gekennzeichnet, dass** die wenigstens eine erste asymmetrische Zahnlücke und die zweite asymmetrische Zahnlücke ferner durch einen Fußradius mit einer ersten Endtangente zu einem radial inneren Ende der ersten Zahneingriffsflanke (120, 220, 320, 420, 620, 720) und einer zweiten Endtangente zu einem radial inneren Ende der angrenzenden zweiten Zahnausrückflanke (130, 230, 330, 430, 630, 730) definiert wird, und dass der Eingriffsflankenrollen-Auflagerwinkel (β) ein erstes Bogensegment des Fußradius definiert und der Ausrückflankenrollen-Auflagerwinkel (β') ein zweites Bogensegment des Fußradius definiert.

**13.** Kettenantriebssystem nach Anspruch 11, weiter **dadurch gekennzeichnet, dass** die wenigstens eine erste asymmetrische Zahnlücke und zweite asymmetrische Zahnlücke ferner durch einen ersten Fußradius ($R_i$) mit einer ersten Endtangente zu der ersten Zahneingriffsflanke (120, 320, 420, 620, 720) und einer zweiten Endtangente zu einer flachen Fußfläche (140, 340, 440, 640, 740), und einen zweiten Fußradius ($R_i'$) mit einer ersten Endtangente zu der angrenzenden Zahnausrückflanke (130, 330, 430, 630, 730) und einer zweiten Endtangente zu der flachen Fußfläche (140, 340, 440, 640, 740) definiert wird, wobei die flache Fußfläche einen Zahnlückenzwischenraum schafft, um das Halten der Rolle in hartem Kontakt mit dem jeweiligen Zahnrad während Drehung desselben zu vereinfachen.

**Revendications**

**1.** Roue dentée pour chaîne à rouleaux unidirectionnelle monobloc comportant une pluralité de dents d'entraînement (110, 210, 310, 410, 610, 710) ayant chacune un flanc d'engrenage (120, 220, 320, 420, 620, 720) et un flanc de désengrenage (130, 230, 330, 430, 630, 730), le flanc d'engrenage d'une première dent coopérant avec le flanc de désengrenage d'une deuxième dent adjacente afin de définir un espace de dent asymétrique pour recevoir un rouleau (90) d'une chaîne à rouleaux associée, **caractérisée en ce que** l'espace de dent asymétrique est défini par un angle d'assise de rouleau latéral d'engrenage (β) qui est supérieur à un angle d'assise de rouleau latéral de désengrenage (β').

**2.** Roue dentée selon la revendication 1, **caractérisée en outre en ce que** l'espace de dent asymétrique est en outre défini par un rayon de pied ayant une première extrémité tangente à une extrémité radialement interne du flanc d'engrenage de la première dent (120, 220, 320, 420, 620, 720) et une deuxième extrémité tangente à une extrémité radialement interne du flanc de désengrenage de la deuxième dent adjacente (130, 230, 330, 430, 630, 730), et **en ce que** l'angle d'assise de rouleau de flanc d'engrenage (β) définit un premier segment d'arc du rayon de pied et l'angle d'assise de rouleau de flanc de désengrenage (β') définit un deuxième segment d'arc du rayon de pied.

**3.** Roue dentée selon la revendication 1, **caractérisée en outre en ce que** l'espace de dent asymétrique est en outre défini par un premier rayon de pied ($R_i$) ayant une première extrémité tangente au flanc d'engrenage de la première dent (120, 320, 420, 620, 720) et une deuxième extrémité tangente à une surface de pied plate (140, 340, 440, 640, 740), et un deuxième rayon de pied ($R_i'$) ayant une première extrémité tangente au flanc de désengrenage de la deuxième dent adjacente (130, 330, 430, 630, 730), et une deuxième extrémité tangente à la surface de pied plate, la surface de pied plate (140, 340, 440, 640, 740) fournissant un dégagement d'espace de dent pour faciliter le maintien du rouleau en un contact ferme avec la roue dentée durant sa rotation.

**4.** Roue dentée selon la revendication 3, **caractérisée en outre en ce que** la surface de pied plate (140, 340, 440, 640, 740) s'étend radialement vers l'extérieur vers le flanc d'engrenage de la première dent (120, 320, 420, 620, 720).

**5.** Roue dentée selon la revendication 3, **caractérisée en outre en ce que** la surface de pied plate (140, 340, 440, 640, 740) s'étend radialement vers l'extérieur vers le flanc de désengrenage de la deuxième dent adjacente (130, 330, 430, 630, 730).

**6.** Roue dentée selon l'une quelconque des revendications précédentes, **caractérisée en outre en ce que** l'espace de dent asymétrique est en outre défini par un angle de pression de flanc d'engrenage de première dent (γ) qui est inférieur ou égal à un angle de pression nominal (γ) selon ISO-606-1994 (E).

**7.** Roue dentée selon la revendication 1, **caractérisée en outre en ce que** l'assise de rouleau latéral d'engrenage d'angle (β) est supérieure ou égale à $\alpha_{NOMINAL}/2$, où $\alpha_{NOMINAL}$ est un angle d'assise de rouleau nominal selon ISO-606-1994 (E).

**8.** Roue dentée selon la revendication 1, **caractérisée en outre en ce que** l'angle d'assise de rouleau latéral d'engrenage (β) est supérieur ou égal à $\alpha_{NOMINAL}/2$ et inférieur ou égal à $\alpha_{MAX}/2$, où $\alpha_{NOMINAL}$ est un angle d'assise de rouleau nominal selon ISO-606-1994 (E) et $\alpha_{MAX}$ est un angle d'assise de rouleau maximum selon ISO-606-1994 (E).

9. Roue dentée selon la revendication 1 ou 8, **caractérisée en outre en ce que** l'angle d'assise de rouleau latéral de désengrenage (β') est inférieur ou égal à α$_{NOMINAL}$/2, où α$_{NOMINAL}$ est un angle d'assise de rouleau nominal selon ISO-606-1994 (E).

10. Roue dentée selon la revendication 1, 8 ou 9, **caractérisée en outre en ce que** l'angle d'assise de rouleau latéral de désengrenage (β') est inférieur ou égal à α$_{NOMINAL}$/2 et supérieur ou égal à α$_{MIN}$/2, où α$_{NOMINAL}$ est un angle d'assise de rouleau nominal selon ISO-606-1994 (E) et α$_{MIN}$ est un angle d'assise de rouleau minimum selon ISO-606-1994 (E).

11. Système d'entraînement de chaîne à rouleaux unidirectionnel comprenant:

une roue dentée d'entraînement monobloc ayant une pluralité de dents d'entraînement (110, 210, 310, 410, 610, 710) ayant chacune un flanc d'engrenage (120, 220, 320, 420, 620, 720) et un flanc de désengrenage (130, 230, 330, 430, 630, 730), le flanc d'engrenage d'une première dent coopérant avec le flanc de désengrenage d'une deuxième dent adjacente afin de définir un premier espace de dent asymétrique ;
une roue dentée entraînée monobloc ayant une pluralité de dents d'entraînement (110, 210, 310, 410, 610, 710) ayant chacune un flanc d'engrenage (120, 220, 320, 420, 620, 720) et un flanc de désengrenage (130, 230, 330, 430, 630, 730), le flanc d'engrenage d'une première dent coopérant avec le flanc de désengrenage d'une deuxième dent adjacente afin de définir un deuxième espace de dent asymétrique ; et
une chaîne à rouleaux ayant des rouleaux en contact engrené avec ladite roue dentée d'entraînement et la roue dentée entraînée, **caractérisé en ce que**
au moins un du premier espace de dent asymétrique et du deuxième espace de dent asymétrique étant défini par un angle d'assise de rouleau latéral d'engrenage (β) qui est supérieur à un angle d'assise de rouleau latéral de désengrenage (β').

12. Système d'entraînement de chaîne selon la revendication 11, **caractérisé en outre en ce que** le au moins un premier espace de dent asymétrique et deuxième espace de dent asymétrique est en outre défini par un rayon de pied ayant une première extrémité tangente à une extrémité radialement interne du flanc d'engrenage de la première dent (120, 220, 320, 420, 620, 720) et une deuxième extrémité tangente à une extrémité radialement interne du flanc de désengrenage de la deuxième dent adjacente (130, 230, 330, 430, 630, 730), et **en ce que** l'angle d'assise de rouleau de flanc d'engrenage (β) définit un premier segment d'arc du rayon de pied et l'angle d'assise de rouleau de flanc de désengrenage (β') définit un deuxième segment d'arc du rayon de pied.

13. Système d'entraînement de chaîne selon la revendication 11, **caractérisé en outre en ce que** le au moins un premier espace de dent asymétrique et deuxième espace de dent asymétrique est en outre défini par un premier rayon de pied (R$_i$) ayant une première extrémité tangente au flanc d'engrenage de la première dent (120, 320, 420, 620, 720) et une deuxième extrémité tangente à une surface de pied plate (140, 340, 440, 640, 740), et un deuxième rayon de pied (R$_i$') ayant une première extrémité tangente au flanc de désengrenage de la dent adjacente (130, 330, 430, 630, 730), et une deuxième extrémité tangente à la surface de pied plate (140, 340, 440, 640, 740), la surface de pied plate fournissant un dégagement d'espace de dent pour faciliter le maintien du rouleau en un contact ferme avec la roue dentée respective durant sa rotation.

FIG. 1
PRIOR ART

FIG. 2
PRIOR ART

EP 0 870 131 B1

FIG. 3

# ROLLER CHAIN SPROCKETS

## ROLLER SEATING & PRESSURE ANGLES

## ISO

| NO. OF TEETH Z | TOOTH ANGLE A | ROLLER SEATING ANGLE *ALPHA* | | PRESSURE ANGLE *GAMMA* | |
|---|---|---|---|---|---|
| | | MINIMUM | MAXIMUM | MAXIMUM | MINIMUM |
| 18 | 20 000 | 115.00 | 135.00 | 22.500 | 12.500 |
| 19 | 18.947 | 115 26 | 135.26 | 22.895 | 12 895 |
| 20 | 18.000 | 115 50 | 135.50 | 23.250 | 13 250 |
| 21 | 17 143 | 115.71 | 135.71 | 23.571 | 13 571 |
| 22 | 16 364 | 115 91 | 135.91 | 23.864 | 13.864 |
| 23 | 15.652 | 116.09 | 136.09 | 24.130 | 14 130 |
| 24 | 15 000 | 116.25 | 136.25 | 24 375 | 14.375 |
| 25 | 14.400 | 116.40 | 136.40 | 24.600 | 14.600 |
| 26 | 13 846 | 116.54 | 136 54 | 24.808 | 14 808 |
| 27 | 13.333 | 116.67 | 136.67 | 25.000 | 15 000 |
| 28 | 12 857 | 116.79 | 136 79 | 25.179 | 15 179 |
| 29 | 12.414 | 116.90 | 136.90 | 25 345 | 15.345 |
| 30 | 12.000 | 117 00 | 137.00 | 25 500 | 15.500 |

## TABLE 1
## PRIOR ART

EP 0 870 131 B1

FIG. 4
PRIOR ART

LINK PITCH

14.6°

A

B

FIG. 5

FIG. 5a

FIG. 5b

FIG. 6

FIG. 6a

EP 0 870 131 B1

FIG. 6b

EP 0 870 131 B1

EP 0 870 131 B1

550

500

TSC

560

B

A

P+ΔP

90

SEE FIG 7a

FIG. 7

A

P+ΔP

90

500

FIG. 7a

FIG. 8

FIG. 9

FIG. 10

# ROLLER CHAIN SPROCKETS

# ROLLER SEATING & PRESSURE ANGLES

## ISO

## ASYMMETRICAL

| NO. OF TEETH Z | ROLLER SEATING ANGLE ALPHA (MIN) | (MAX) | ALPHA (MAX) /2 | PRESSURE ANGLE GAMMA (MIN) | PROFILE 1 BETA (MAX) | PRESSURE ANGLE GAMMA (MIN) | PROFILE 2 BETA (MAX) | PRESSURE ANGLE GAMMA (MIN) |
|---|---|---|---|---|---|---|---|---|
| 18 | 115.00 | 135.00 | 67.50 | 12 500 | 80.00 | 0 | 76.88 | 3.13 |
| 19 | 115.26 | 135.26 | 67.63 | 12 895 | 80.53 | 0 | 77.30 | 3 22 |
| 20 | 115.50 | 135.50 | 67.75 | 13.250 | 81.00 | 0 | 77.69 | 3.31 |
| 21 | 115.71 | 135.71 | 67.86 | 13 571 | 81 43 | 0 | 78.04 | 3.39 |
| 22 | 115.91 | 135.91 | 67.95 | 13.864 | 81.82 | 0 | 78.35 | 3 47 |
| 23 | 116.09 | 136.09 | 68.04 | 14.130 | 82.17 | 0 | 78.64 | 3.53 |
| 24 | 116.25 | 136.25 | 68.13 | 14.375 | 82.50 | 0 | 78.91 | 3.59 |
| 25 | 116.40 | 136.40 | 68.20 | 14 600 | 82.80 | 0 | 79.15 | 3.65 |
| 26 | 116.54 | 136 54 | 68.27 | 14 808 | 83.08 | 0 | 79.38 | 3.70 |
| 27 | 116.67 | 136.67 | 68 33 | 15.000 | 83.33 | 0 | 79.58 | 3.75 |
| 28 | 116.79 | 136.79 | 68.39 | 15.179 | 83.57 | 0 | 79 78 | 3.79 |
| 29 | 116.90 | 136.90 | 68.45 | 15.345 | 83.79 | 0 | 79.96 | 3.84 |
| 30 | 117.00 | 137.00 | 68.50 | 15.500 | 84.00 | 0 | 80.13 | 3.88 |

## TABLE 2

EP 0 870 131 B1

ROLLER IMPACT vs ENGINE RPM

25-TOOTH SPROCKET
8mm PITCH ROLLER CHAIN

FIG. 11

FIG. 12

FIG. 13

FIG. 14

940"

900"

930"

920"

Y

X

935"

925"

CHAIN
GUIDE

MECHANICAL CHAIN
TENSIONER

CHAIN
GUIDE

910"

EP 0 870 131 B1